# EUROPEAN PATENT APPLICATION

(11) **EP 2 030 507 A2**
(43) Date of publication of application: **04.03.2009**
(21) Application number: 08163010.5
(22) Date of filing: 26.08.2008
(51) Int. Cl.: A23C 19/082

(54) **Process cheese products with dual functionally**

(30) Priority: 28.08.2007 US 968441 P
(71) Applicant: Kraft Foods Global Brands LLC, Northfield, Illinois 60093 (US)
(72) Inventor: REYES, Divinia, Delahey, Victoria 3037 (AU)
(74) Representative: Smaggasgale, Gillian Helen

(57) **Abstract**

Methods for producing process cheese products having both good melting properties and good shredding properties are provided. The dual functionality process cheese products provided herein can be provided in a wide variety of formats and used in a wide variety of food service applications.

## Description

### FIELD OF THE INVENTION

The present invention relates to process cheese products having dual functionality with regard to melting and shredding characteristics and methods of preparing such products. The process cheese products of the present invention have both a firm texture suitable for commercial shredding and good melting properties.

### BACKGROUND OF THE INVENTION

Process cheese products are generally prepared by heating natural cheeses with emulsifying salts, water, and other desired components to provide a homogenous mixture which is then cooled. Generally process cheese has either good melting properties (generally a Schreiber melt test score of 3 or greater) but is too soft (i.e., inability to form non-agglomerating cheese shreds) or it is firm enough to allow effective shredding but has poor melting properties. Efforts have been made to provide process cheeses with specific properties or characteristics which can then be used for different and specific applications. Unfortunately, it has not been possible to obtain a process chesses with acceptable firmness and meltability.

For example, U.S. Patent 3,962,483 (June 8, 1976) provided a melt resistant process cheese composition by blending an effective amount (about 2 to about 20 percent) of a heat-coagulating material (e.g., proteins such as albumins and globulins) to a process cheese at elevated temperatures (about 55 but less than about 70°C), pouring the mixture into the desired molds, and heating the mixture to a temperature to coagulate the added protein (along with the casein in the process cheese; generally above about 70°C). The resulting melt resistant process cheese product is resistant to melting when subsequently heated. Thus, although resulting melt resistant process cheese product is sufficiently firm to allow shredding, it no longer has the desired melting properties.

U.S. Patent 5,807,601 (Sept. 15, 1998) provided imitation cheese products wherein essentially all the protein was replaced by starch and gums. The functionality of this imitation cheese product can, to a certain extent, be controlled by the adjusting the amount of starch. If the starch is present at about 3 to 5 percent in the final product, good melt properties are obtained but the texture is not suitably firm to allow for shredding. If the amount of starch is increased up to about 30 percent, a firm texture is obtained which allows for shredding but the desired melting properties are lost. None of the imitation cheese products prepared by the methods of this patent contained both the firmness necessary for shredding and good melting properties. Because these imitation cheese products contain essentially no casein, convention process cheese emulsifying salts were not required. Of course, because of the low protein levels, these imitation cheese products lack the nutritional benefits normally associated with cheese products.

It would be desired to provide process cheese products having both good melting and a texture firm enough to provide good shredding properties. It would also be desirable to provide such a process cheese product which could be provided in different forms or formats (e.g., bulk, slices, shreds, and the like) and which maintained the desired melting properties. The present invention provides improved process cheese products which have both good melting and goof shredability properties and which can be provided in a number of different forms depending on the specific application for which the process cheeses products are intended to be used.

### SUMMARY OF THE INVENTION

The present invention relates to process cheese products, in a single formulation, having dual functionality with regard to melting and shredding characteristics and methods of preparing such products and to methods of making such process cheese products. The process cheese products of the present invention have firm textures suitable for commercial shredding and good melting properties. The process cheese products of this invention can be prepared in a number of forms or format (e.g., bulk blocks or other forms, cubes, slices, bars, shreds, and the like). Thus, for example, the process cheese products of the present invention could be initially formed into bulk blocks or other shapes (e.g., 1 to 10kg block or even larger) and then stored in bulk; depending on the specific need, they could later processed into the desired form (e.g., shreds, cubes, and the like) for use in specific products and/or applications. The process cheese products of this invention can be used in a variety of applications, especially the applications which take advantage of the dual functionality (e.g., baking, pizza toppings, and the like).

The process cheese products of this invention generally have shredability and meltability similar to natural cheese. For purposes of this invention, shredability is considered good if the product forms non-agglomerating and uniform shreds when shredded in commercial shredding equipment; generally, a Stevens hardness value of at least about 125 grams will suggest sufficient hardness for good shredability. For purposes of this invention, good meltability is indicated by a Schreiber melt test score of at least 3.

This dual functionality allows the process cheese products of this invention to be used in many applications in which currently only natural cheese products can be satisfactorily used; of course, the process cheese products can also be used in many of the applications in which conventional process cheese is currently used. Thus, the process cheese products of this invention can used in many different applications and are very versatile.

### BRIEF DESCRIPTION OF DRAWINGS

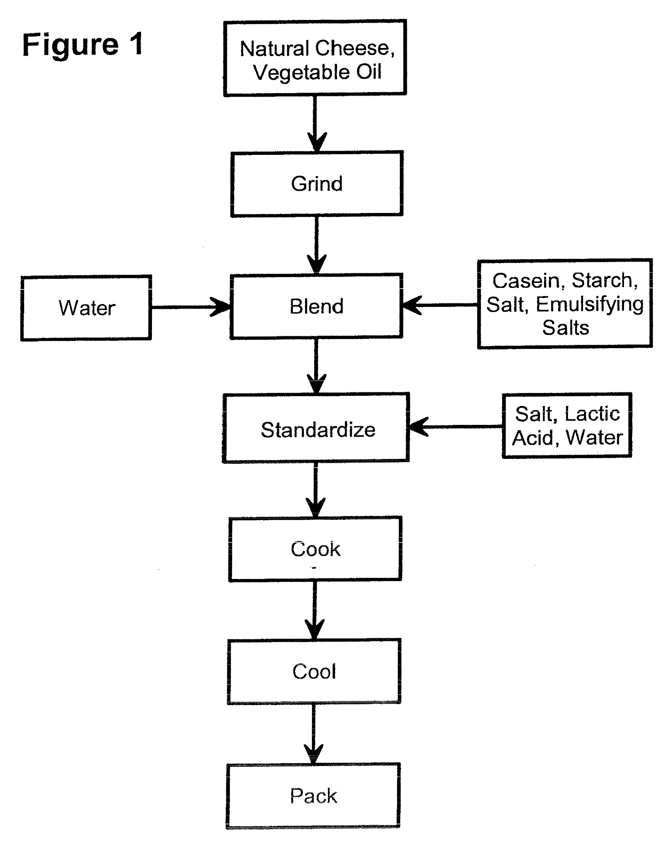

Figure 1 provides a general flow diagram of one embodiment of the process of this invention.

### DETAILED DESCRIPTION

The present invention relates to relates to process cheese products, in a single formulation, having dual functionality with regard to melting and shredding characteristics and methods of preparing such products and to methods of making such process cheese products. The process cheese products of this invention comprise a casein protein source (e.g., natural cheese, rennet casein, and mixtures thereof); a fat source (e.g., a vegetable oil such as palm oil); an emulsifying salt composition; an acid modified starch, distarch phosphate, or mixture thereof; and an emulsifying starch (e.g., starch sodium octenylsuccinate), wherein the process cheese product has a moisture content of about 45 to about 50 percent and a protein content of about 12 to about 16 percent; wherein the emulsifying salt composition comprises sodium phosphate (e.g., monosodium phosphate, disodium phosphate, or mixtures thereof) and trisodium citrate in a first ratio of about 0.1 to about 1; wherein a second ratio of the acid modified starch, distarch phosphate, or mixture thereof to the emulsifying starch is about 1 to about 3; and wherein the process cheese product has both good melting properties and a texture suitable for shredding. Although not wishing to be limited by theory, it is thought that the inclusion of the acid modified starch and/or distarch phosphate in combination with the emulsifying starch in the process cheese formulation allows for the dual functionality. Generally, the second ratio of the acid modified starch, distarch phosphate, or mixture thereof to the emulsifying starch is about 1 to about 3 and preferably about 1.4 to about 2.8.

This invention also relates to a method for producing a process cheese product having both good melting properties and a texture suitable for shredding, said method comprising
(1) blending (a) a casein protein source, (b) a fat source, (c) an emulsifying salt composition, (d) an acid modified starch, a distarch phosphate, or mixture thereof, (e) an emulsifying starch, and (f) water to form a homogenous mixture;
(2) cooking the homogenous mixture with mixing at a temperature of about 90 to about 112°C for a time sufficient to ensure emulsification and microbiological stability; and
(3) cooling the cooked homogenous mixture in a container or mold to obtain the process cheese product in a desired format;
wherein the process cheese product has a moisture content of about 45 to about 50 percent and a protein content of about 12 to about 16 percent; wherein the emulsifying salt composition comprises sodium phosphate and trisodium citrate in a first ratio of about 0.1 to about 1; wherein a second ratio of the acid modified starch, distarch phosphate, or mixture thereof to the emulsifying starch is about 1 to about 3; and wherein the process cheese product has a Schreiber melt test score of at least 3 and Stevens hardness value of at least about 125 grams.

A general formulation for the process cheese of this invention is presented in the following table. Of course, the formulation must provide the dual functionality as described in this specification and an otherwise acceptable process cheese product from an organoleptic standpoint.

| **Ingredients** | **General (%)** | **Preferred (%)** |
|---|---|---|
| Cheese^{†} | 35 - 50 | 40 - 44 |
| Rennet Casein^{†} | 2 - 8 | 4 - 6 |
| Sodium Phosphate^{††} | 0.5 - 1.5 | 0.8 - 1.2 |
| Trisodium Citrate^{††} | 1 - 1.8 | 1.3 - 1.5 |
| Acid Modified Starch and/or Distarch Phosphate^{‡} | 1 - 5 | 2 - 4 |
| Emulsifying Starch^{‡} | 1 - 2 | 1.2 - 1.7 |
| Vegetable Oil | 10 - 18 | 13 - 16 |
| pH Adjustment Agent | As needed to adjust pH to desired level | |
| Salt | As needed | |
| Flavorants | As needed | |
| Preservatives | As needed | |
| Colorants | As needed | |
| Water (all sources) | As needed to adjust moisture to desired level | |

| | | |
|---|---|---|
| ^{†} The levels of cheese and rennet casein can be balanced to achieve the desired protein levels and dual functionality as described herein. ^{††} The levels of the emulsifying salts should be balanced to achieve the desired first ratio and dual functionality as described herein. ^{‡} The levels of the starches should be balanced to achieve the desired second ratio and dural functionality as described herein. | | |

The ingredient levels presented in the above table can be varied (either within or outside of the listed ranges) so long as the resulting process cheese product has the desired dual functionality as described herein and also results in a satisfactory process cheese product.

One general embodiment of the method of preparing the dual functionality process cheese products of this invention is illustrated in Figure 1. The natural cheese (generally the first casein source) and vegetable oil (preferably palm oil) are preferably ground to reduce particle size and better prepare the mixture for the following blending step. Although not critical, it is generally preferred that the grinding result in a particle size of about 1 to about 10 mm, and more preferably about 3 to 7 mm, for the mixture. This grinding step is not required; its absence, however, will likely make the next blending step more difficult and/or time consuming. After the grinder, the mixture is blended with water followed by blending with the second casein source (preferably rennet casein), starches (i.e., acid modified starch and emulsifying starch), at least a portion of the desired salt, and the emulsifying salts; if optional ingredients (e.g., coloring, flavoring, preservatives, and the like) are to be added, they may also be added at this time. The blending step should be sufficient to obtain a homogenous blended mixture. The blended mixture is then standardized to achieve the desired levels of salt, pH (via addition as needed of lactic acid), and moisture content(via water addition as needed). The standardization of the moisture content should take into account water that may be added during the cooking stage if steam injection is used (as is preferred). After standardization, the mixture is cooked with mixing, preferably in a steam-injection cooker, at a temperature of about 90 to about 112°C for a time (generally about 0.5 to about 2 minutes) sufficient to ensure complete emulsification and microbiological stability. After the cooking step, the mixture is cooled and then packed in the appropriate containers or molds. Preferably, the initial cooling (generally to below about 85°C) is relatively rapid followed by a relatively slow cooling to refrigeration temperatures (e.g., about 2 or about 4°C).

The invention will now be illustrated by specific examples which describe preferred embodiments of the present invention. They are not intended to limit the scope of the invention. Unless otherwise indicated, all ratios and percentages throughout this specification are by weight. All patents and other publications discussed in this specification are hereby incorporated by reference.

**Example 1.** The formulations presented in the table below were used to prepare process cheese products which were then examined for both meltability and firmness. The amounts of the ingredients in the table are given in grams. The general method illustrated in Figure 1 was used with a Stephan Cooker (cooked at about 95°C for about 1 minute). Samples were cooled at refrigeration temperatures for about 48 hours before test for firmness and meltability. Meltability was evaluated using the conventional Schreiber melt test method (i.e., heating a 39.5 mm diameter and 10 mm thick cheese disk at 230±5°C for 5 minutes and noting the increase in diameter due to melting). Firmness was evaluated using the conventional Stevens hardness test method.

| | **Sample** | | | | | | | | |
|---|---|---|---|---|---|---|---|---|---|
| | **A1** | **A2** | **A3** | **A4** | **A5** | **A6** | **A7** | **A8** | **A9** |
| **Cheese (Total)** (g): | **45.19** | **42.9** | **40** | **30** | **36.5** | **40** | **40.5** | **36.5** | **40** |
| New Cheddar (g) | 39.69 | | 10 | 20 | 26 | 30 | 15 | 26 | 25 |
| Old Cheddar (g) | 5 | 5 | 10 | 10 | 10 | 10 | 5 | 10 | 15 |
| Mozzarella (g) | | 37.4 | 20 | | | | | | |
| Cheddar Semi Mature (g) | 0.5 | 0.5 | | | | | | | |
| Enzyme Modified Cheese (g) | | | | | 0.5 | | 20 0.5 | 0.5 | |
| **Dairy Powders:** | | | | | | | | | |
| Skim Milk Powder(g) | 5.06 | | 2 | 5 | | | | | |
| Rennet Casein (g) | 4.2 | 6.3 | 5 | 4 | 5 | 5 | 5 | 5 | 5 |
| Whey Powder (g) | | 3 | | | | | | | |
| Whey Protein Concentrate (g) | | 1 | | | | | | | |
| **Emulsifying Salts:** | | | | | | | | | |
| Di Sodium Phosphate (g) | 2.53 | 2.53 | 2.5 | 2 | 2.5 | 0.4 | 0.4 | 0.5 | 0.4 |
| Mono Sodium Phosphate (g) | 0.45 | 0.45 | 0.45 | | 0.45 | | | | |
| Sodium Hexmetaphosphate (40%) (g) | 0.16 | 0.4 | | | | | | | |
| Tri Sodium Citrate (g) | | | | 0.6 | 1 | 1.6 | 1.6 | 2 | 1.6 |
| **Starches / Filler:** | | | | | | | | | |
| Acid Treated Starch (g) | | | 3 | 4 | 3 | | 3 | 3 | 3 |
| Di Starch Phosphate (g) | | | 1 | 1 | | 4 | | | |
| Starch Sodium Octenylsuccinate (g) | | | | | | 1.5 | 1.5 | 2.0 | 1.5 |
| Hydroxypropyl Di Starch Phosphate (g) | | | | | 1 | | | | |
| Maltodextrin (g) | 3.3 | 3.3 | | | | | | | |
| **Fat Source:** | | | | | | | | | |
| Palm Oil (g) | 9.1 | 12.36 | 14 | 12 | 16 | 14 | 16 | 16 | 14 |
| **Acid:** | | | | | | | | | |
| Lactic Acid (88%) (g) | 0.3 | 0.3 | 0.3 | 0.8 | 0.3 | 0.3 | 0.3 | 0.3 | 0.3 |
| **Salt/Preservative:** | | | | | | | | | |
| Salt (g) | 1.1 | 1.1 | 0.7 | 0.7 | 1 | 1 | 1 | 1 | 1 |
| Sorbic Acid (g) | 0.3 | 0.3 | 0.2 | 0.2 | 0.2 | 0.2 | 0.2 | 0.2 | 0.2 |
| Nisaplin (g) | 0.04 | 0.04 | 0.02 | 0.0112 | 0.02 | 0.02 | 0.02 | 0.02 | 0.02 |
| **Water Added** (g) | 28.27 | 26.02 | 30.83 | 39.6888 | 34..48 | 31.98 | 30.48 | 31.48 | 32.98 |

Each of Samples A1-A9 were analyzed for moisture, fat, protein, casein, and the like. The following results were obtained.

| **Sample** | **Moisture (%)** | **Fat (%)** | **Protein (%)** | **Casein (%)** | **LIMP^{†} (%)** |
|---|---|---|---|---|---|
| A1 | 46.2 | 24.4 | 17.1 | 14.8 | 5.6 |
| A2 | 45.7 | 21.7 | 17.3 | 12.0 | 10.2 |
| A3 | 48.2 | 24.9 | 15.2 | 12.1 | 2.2 |
| A4 | 52.4 | 22.4 | 12.9 | 11.1 | 4.9 |
| A5 | 48.9 | 28.5 | 13.6 | 11.8 | 1.0 |
| A6 | 47.6 | 27.7 | 14.6 | 12.7 | 0.09 |
| A7 | 47.3 | 27.8 | 14.3 | 12.5 | 0.01 |
| A8 | 48.8 | 28.5 | 13.7 | 11.8 | 0.09 |
| A9 | 48.4 | 27.8 | 14.6 | 12.5 | 0.09 |

| | | | | | |
|---|---|---|---|---|---|
| ^{†} LIMP refers to lactose in moisture phase. | | | | | |

The results of the meltability and firmness evaluations of Samples A1-A9 are shown in the table below. A commercially available process cheese was also evaluated as a control.

| **Sample** | **Schreiber Melt Value** | **Stevens Hardness Value (g)** | **Comments** |
|---|---|---|---|
| Control | 2 | 233 | poor meltability; acceptable firmness |
| A1 | 1 | - | poor meltability; acceptable firmness |
| A2 | 1 | - | poor meltability; acceptable firmness |
| A3 | 1 | 290 | poor meltability; acceptable firmness |
| A4 | 6 | - | acceptable meltability; poor firmness (soft and pasty) |
| A5 | 1 | 303 | poor meltability; acceptable firmness; |
| A6 | 4 | 195 | acceptable meltability & firmness |
| A7 | 4 | 199 | acceptable meltability & firmness |
| A8 | 5 | 113 | acceptable meltability; insufficient firmness |
| A9 | 5 | 139 | acceptable meltability & firmness |

Based on Samples A1 and A2, it appears that low moisture, high casein, high phosphate emulsifier, and high dairy solids produces a firm process cheese product that is melt resistant (i.e., poor meltability). Based on Sample A3, it appears that lowering the dairy solids, casein, and phosphate emulsifier with the addition of acid treated starch and distarch phosphate does not significantly change either firmness or meltability relative to Samples A1 and A2. Lowering the casein and replacing the phosphate emulsifier with the citrate emulsifier along with higher levels of acid treated starch and distarch phosphate appears to yield a softer A4 product having good melting properties. For Sample A4, it appears that lowering the moisture and increasing the amount of trisodium citrate, relative to Sample A3, and using acid treated starch and hydroxylpropyl distarch phosphate improves the texture but also renders the sample melt resistant.

For Samples A6 and A7, it appears that using a combination of either acid treated starch or distarch phosphate with starch sodium octenylsuccinate, casein, and the citrate emulsifier resulted in products having both good firmness and good meltability. Increasing the level of starch sodium octenylsuccinate in Sample A8 did not appear to significantly change the melting properties but did appear to reduce the firmness to unacceptable levels relative to Samples A6 and A7. Sample A9 also provided both good firmness and good meltability characteristics while being one of the lower cost formulations. As noted, only Samples A6, A7, and A9 had sufficient firmness to allow for shredding and good melting properties.

Example 2. An especially preferred process cheese product having both good firmness and good meltability was prepared on a pilot plant scale using the following formulation using the general procedure outlined in Figure 1 using a conventional steam injected lay down cooker. The formulation used was as follows.

| **Ingredients** | **Amount (%)** |
|---|---|
| Mature Cheese | 10.2 |
| Cheddar Cheese | 32.2 |
| Rennet Casein | 4.8 |
| Di-Sodium Phosphate Di-hydrate | 1.0 |
| Trisodium Citrate | 1.4 |
| Acid Modified Food Starch | 3.0 |
| Starch Sodium Octenylsuccinate (modified waxy maize) | 1.5 |
| Palm Oil | 14.7 |
| Lactic Acid (88%) | 0.25 |
| Vacuum Dried Salt (Bulk) | 1.0 |
| Sorbic Acid | 0.1 |
| Nisaplin | 0.01 |
| Colorant | 0.01 |
| Water Addition | 22.7 |
| Water Injected with Steam | 7.2 |

## Claims

1. A process cheese product comprising a casein protein source; a fat source; an emulsifying salt composition; an acid modified starch, a distarch phosphate, or mixture thereof); and an emulsifying starch, wherein the process cheese product has a moisture content of about 45 to about 50 percent and a protein content of about 12 to about 16 percent, wherein the emulsifying salt composition comprises sodium phosphate and trisodium citrate in a first ratio of about 0.1 to about 1, wherein a second ratio of the acid modified starch, distarch phosphate, or mixture thereof to the emulsifying starch is about 1 to about 3, and wherein the process cheese product has both good melting properties and a texture suitable for shredding.

2. The process cheese product of claim 1, wherein the process cheese product has a Schreiber melt test score of at least 3 and Stevens hardness value of at least about 125 grams.

3. The process cheese product of Claim 1 or 2, wherein the second ratio is about 1.4 to about 2.8.

4. The process cheese product of claim 2, wherein the second ratio is about 1.4 to about 2.8.

5. The process cheese product of any one of Claims 1 to 3, wherein the process cheese product has a Schreiber melt test score of at least 4 and Stevens hardness value of at least about 150 grams.

6. The process cheese product of any one of Claims 1 to 5, wherein the casein protein source comprises natural cheese and rennet casein, wherein the fat source comprises palm oil, and wherein the sodium phosphate is disodium phosphate.

7. A method for producing a process cheese product having both good melting properties and a texture suitable for shredding, said method comprising
(1) blending (a) a casein protein source, (b) a fat source, (c) an emulsifying salt composition, (d) an acid modified starch, a distarch phosphate, or mixture thereof, (e) an emulsifying starch, and (f) water to form a homogenous mixture;
(2) cooking the homogenous mixture with mixing at a temperature of about 90 to about 112°C for a time sufficient to ensure emulsification and microbiological stability; and
(3) cooling the cooked homogenous mixture in a container or mold to obtain the process cheese product in a desired format;
wherein the process cheese product has a moisture content of about 45 to about 50 percent and a protein content of about 12 to about 16 percent; wherein the emulsifying salt composition comprises sodium phosphate and trisodium citrate in a first ratio of about 0.1 to about 1; wherein a second ratio of the acid modified starch, distarch phosphate, or mixture thereof to the emulsifying starch is about 1 to about 3; and wherein the process cheese product has a Schreiber melt test score of at least 3 and Stevens hardness value of at least about 125 grams.

8. The method of Claim 7, wherein the cooking is carried out in a steam-injection cooker for about 0.5 to about 2 minutes.

9. The method of Claim 7 or 8, wherein the desired format is a bulk block or other shape suitable for storage and wherein the bulk block or other shape can be further processed, at a later time and as needed, into forms suitable for a specific application.

10. The method of any one of Claims 7 to 9, wherein the second ratio is about 1.4 to about 2.8 and wherein the process cheese product has a Schreiber melt test score of at least 4 and Stevens hardness value of at least about 150 grams.

11. The method of any one of Claims 7 to 10, wherein the casein protein source comprises natural cheese and rennet casein, wherein the fat source comprises palm oil, and wherein the sodium phosphate is disodium phosphate.
